# EUROPÄISCHE PATENTSCHRIFT

(11) **EP 1 154 127 B1**
(45) Veröffentlichungstag und Bekanntmachung des Hinweises auf die Patenterteilung: **23.01.2008**
(21) Anmeldenummer: 01109846.4
(22) Anmeldetag: 23.04.2001
(51) Int. Cl.: F01K 23/10

(54) **Verfahren zum Betrieb eines Kombikraftwerkes sowie Kombikraftwerk zur Durchführung des Verfahrens**
Method of operating a combined power plant and combined power plant for carrying out the method
Procédé de fonctionnement d'une centrale combinée et centrale combinée pour la mise en oeuvre du procédé

(30) Priorität: 08.05.2000 DE 10022243
(43) Veröffentlichungstag der Anmeldung: 14.11.2001
(73) Patentinhaber: Alstom Technology Ltd, 5400 Baden (CH)
(72) Erfinder: Liebig, Erhard, Dr., 79725 Laufenburg (DE); Rickli, Jean-Pierre, 8610 Uster (CH)

(56) Entgegenhaltungen:
- EP-A- 0 615 061
- PATENT ABSTRACTS OF JAPAN vol. 010, no. 037 (M-453), 14. Februar 1986 (1986-02-14) & JP 60 190607 A (HITACHI SEISAKUSHO KK), 28. September 1985 (1985-09-28)
- PATENT ABSTRACTS OF JAPAN vol. 015, no. 101 (M-1091), 11. März 1991 (1991-03-11) & JP 03 000908 A (TOSHIBA CORP), 7. Januar 1991 (1991-01-07)

## Beschreibung

### TECHNISCHES GEBIET

Die vorliegende Erfindung bezieht sich auf das Gebiet der Kraftwerkstechnik. Sie betrifft ein Verfahren gemäss dem Oberbegriff des Anspruchs 1 sowie ein Kombikraftwerk zur Durchführung des Verfahrens.

### STAND DER TECHNIK

Beim Start bzw. Kaltstart eines Kombikraftwerkes, bei welchem Kombikraftwerk die heissen Abgase einer Gasturbinenanlage verwendet werden, um innerhalb eines Wasser/Dampf-Kreislaufes in einem Abhitzekessel Dampf zu erzeugen und diesen über eine Dampfturbine abzuarbeiten, sind der Abhitzekessel wegen seines nicht stabilen bzw. nicht kontrollierbaren Verhaltens in der Anfangsphase bis etwa 10 (bis 20) bar sowie die dickwandigen Bauteile (Komponenten) des Wasser/Dampf-Kreislaufes (Kesseltrommeln, Dampfleitungen, Dampfturbinen,....) hinsichtlich auftretender Wärmespannungen als kritische, die Anfahrzeit bestimmende Komponenten anzusehen. Die dickwandigen Behälter und Komponenten sind besonders empfindlich im Hinblick auf grosse Temperaturgradienten. Gegeben durch die Stoffeigenschaften von Wasser bzw. Dampf, entstehen beim Anfahren bzw. beim Druckaufbau im System eben solche grossen Temperaturgradienten, und dies noch dazu in einer Phase, wo die Anlage mehr oder weniger ihrem natürlichen Verlauf überlassen werden muss. Erst ab einem Druck von ca. 10 bis 20 bar ist ein regelungstechnisches Eingreifen praktisch möglich. Dabei liegt die Sättigungstemperatur bereits bei ca. 180 bis 210°C. Eine Vorwärmung (beim Kaltstart) bzw. eine Warmhaltung (beim Wiederanfahren) kann in solchen Fällen die Spannungen auf einem tiefen Niveau halten und die Anfahrzeiten beträchtlich verkürzen.

In der US-A-5,473,898 ist für ein Kombikraftwerk vorgeschlagen worden, komprimierte, erwärmte Luft aus dem Verdichter der zugehörigen Gasturbinenanlage abzuzweigen und damit die Dampfturbine des Wasser/Dampf-Kreislaufes vorzuwärmen. Nachteilig ist dabei, dass einerseits zur Vorwärmung die Gasturbinenanlage bereits angefahren sein muss, und dass andererseits ein anderes Medium (Fluid) als das Arbeitsmedium zur Vorwärmung benutzt wird.

In der US-A-5,042,246 wird zur Vorwärmung der Dampfturbine ein separater Hilfsdampferzeuger vorgeschlagen. Ein solcher separater Hilfsdampferzeuger bedingt jedoch einen erheblichen zusätzlichen apparativen Aufwand.

In der US-A-5,203,160 wird zur Vorwärmung der Dampfturbine eines Kombikraftwerkes Dampf aus einem Hilfsdampfsystem entnommen. Ueber die Erzeugung des Hilfsdampfes werden allerdings keinerlei Angaben gemacht.

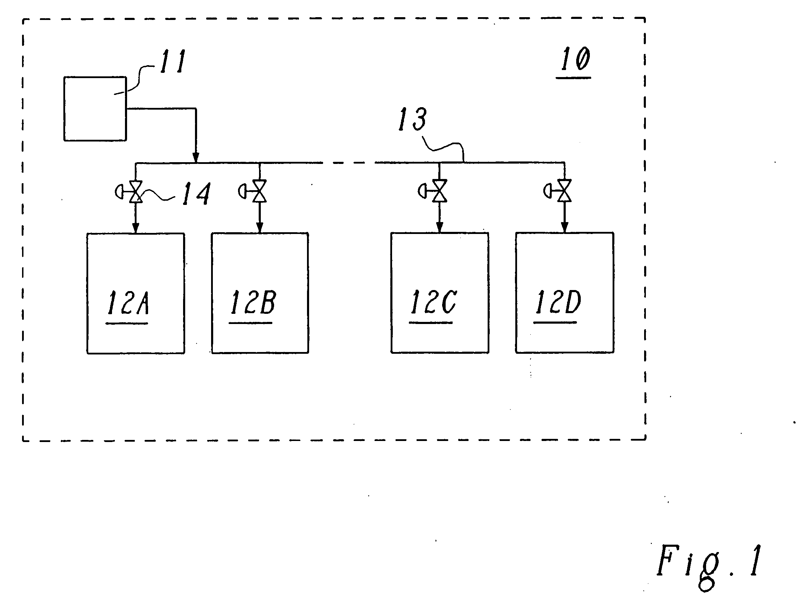

Die EP-B1-0 415 300 schliesslich schlägt für ein reines Dampfkraftwerk mit mehreren Kraftwerkseinheiten den Einsatz einer gemeinsamen Hilfsdampfschiene vor, aus der Anfahrdampf für die einzelnen Bedarfsstellen entnommen werden kann. Der Anfahrdampf für die Hilfsdampfschiene wird dabei in einem Abhitzekessel erzeugt, der mit den heissen Abgasen einer separaten Anfahrgasturbine beaufschlagt wird. Das stark vereinfachte Anlagenschema einer solchen Anlage ist in Fig. 1 wiedergegeben. Das Dampfkraftwerk 10 umfasst mehrere Kraftwerkseinheiten 12A,..,12D, die jeweils über Ventile 14 an eine gemeinsame Hilfsdampfschiene 13 angeschlossen sind. Der Anfahrdampf für die Hilfsdampfschiene 13 wird in einem separaten Anfahrdampferzeuger 11 erzeugt, der an die Hilfsdampfschiene 13 angeschlossen ist. Wird in einer der Kraftwerkseinheiten 12A,..,12D Anfahrdampf benötigt, wird das entsprechende Ventil 14 geöffnet und der Dampf aus der Hilfsdampfschiene entnommen.

Aus der JP-A-60190607 ist ein mehrere Gasturbinen, mehrere Abhitzedampferzeuger und Dampfturbinen umfassendes Kraftwerk bekannt, bei dem die von den Abhitzedampferzeugern zu der Dampfturbine führenden Hauptdampfleitungen durch eine gemeinsame Aufwärm-Verbindungsleitung miteinander verbunden sind. Die Aufwärm-Verbindungsleitung ist an jedem der Abhitzedampferzeuger durch ein entsprechendes Aufwärmventil absperrbar. Im Normalbetrieb sind die Aufwärmventile geschlossen. Beim Anfahren der Anlage sind die Aufwärmventile geöffnet, so dass die Abhitzedampferzeuger untereinander heissen Aufwärmdampf austauschen können, um die Anfahrzeit der Dampfturbine zu verkürzen. Ein gezieltes Aufwärmen oder Warmhalten einzelner Komponenten der Kraftwerkseinheiten ist mit dieser Art der Verschaltung nicht möglich.

### DARSTELLUNG DER ERFINDUNG

Es ist Aufgabe der Erfindung, ein Verfahren zum Betrieb eines mehrere Kraftwerkseinheiten umfassenden Kombikraftwerkes anzugeben, welches mit geringem Zusatzaufwand auf einfache Weise eine Vorwärmung bzw. Warmhal tung in einer Kraftwerkseinheit ermöglicht und damit die Anfahrzeiten erheblich verkürzt, sowie ein Kombikraftwerk zur Durchführung des Verfahrens anzugeben.

Die Aufgabe wird durch die Gesamtheit der Merkmale der Ansprüche 1 und 4 gelöst. Der Kern der Erfindung besteht darin, die einzelnen Kraftwerkseinheiten durch eine Bereitschaftshaltungs-Sammelschiene zu verbinden und ein Wärme transportierendes Fluid, insbesondere Sattdampf, aus einem oder mehreren der in Betrieb befindlichen Kraftwerkseinheiten zu entnehmen und zum Vorwärmen bzw. Warmhalten einer anderen Kraftwerkseinheit zu verwenden.

Eine bevorzugte Ausgestaltung des erfindungsgemässen Verfahrens besteht darin, dass als Wärme transportierendes Fluid Sattdampf verwendet wird, weil dieser für die mit Dampf beaufschlagten Komponenten des Wasser/Dampf-Kreislaufes besonders geeignet ist.

Eine bevorzugte Ausgestaltung des Kombikraftwerkes nach der Erfindung ist dadurch gekennzeichnet, dass als Wärme transportierendes Fluid Sattdampf verwendet wird, und dass die Bereitschaftshaltungs-Sammelschiene zur Sattdampfentnahme jeweils über eine Sattdampfleitung mit einer oder mehreren Kraftwerkseinheiten verbunden ist.

Insbesondere kann, wenn die Kraftwerkseinheiten jeweils eine Gasturbinenanlage mit einem Kühlluftkühler umfassen, die Bereitschaftshaltungs-Sammelschiene über eine Sattdampfleitung an den Kühlluftkühler angeschlossen sein.

Es kann aber auch, wenn die Kraftwerkseinheiten jeweils einen Abhitzekessel mit einer Dampftrommel umfassen, die Bereitschaftshaltungs-Sammelschiene über eine Sattdampfleitung an die Dampftrommel angeschlossen sein.

Schliesslich kann, wenn die Kraftwerkseinheiten jeweils einen Abhitzekessel mit einem Separator umfassen, die Bereitschaftshaltungs-Sammelschiene über eine Sattdampfleitung an den Separator angeschlossen sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: das Anlagenschema eines mehrere Kraftwerkseinheiten umfassenden Dampfkraftwerkes mit einer gemeinsamen Hilfsdampfschiene und separatem Anfahrdampferzeuger nach dem Stand der Technik;
- Fig. 2: das Anlagenschema eines mehrere Kraftwerkseinheiten umfassenden Kombikraftwerkes mit gemeinsamer Bereitschaftshaltungs-Sammelschiene zur Verteilung von Vorwärm- bzw. Warmhaltungsfluid gemäss einem bevorzugten Ausführungsbeispiel der Erfindung;
- Fig. 3: ein Beispiel für den internen Aufbau einer der Kraftwerkseinheiten aus Fig. 2 mit einem Abhitzekessel mit Umlaufverdampfer mit verschiedenen Anschlussmöglichkeiten zur Einspeisung von Sattdampf in die Bereitschaftshaltungs-Sammelschiene; und
- Fig. 4: ein Beispiel für den internen Aufbau einer der Kraftwerkseinheiten aus Fig. 2 mit einem Abhitzekessel mit Zwangdurchlaufverdampfer mit verschiedenen Anschlussmöglichkeiten zur Einspeisung von Sattdampf in die Bereitschaftshaltungs-Sammelschiene

### WEGE ZUR AUSFÜHRUNG DER ERFINDUNG

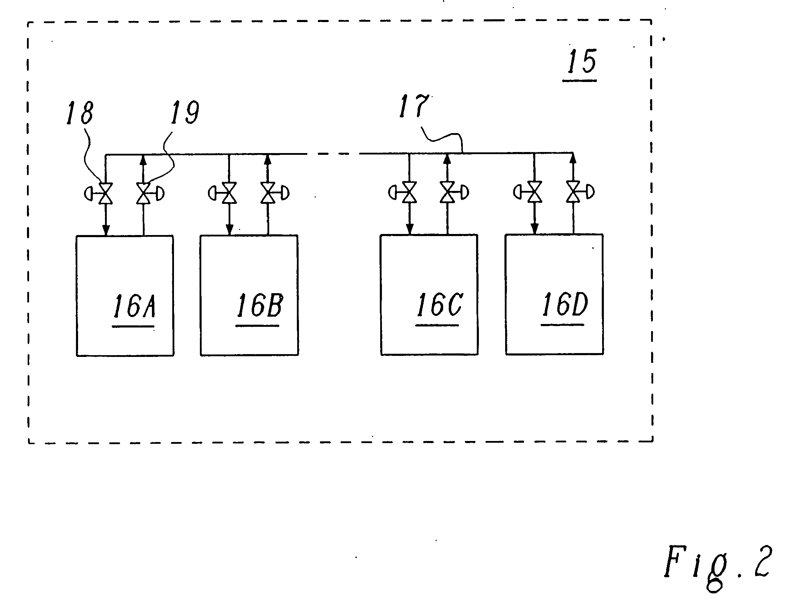

In Fig. 2 ist das stark vereinfachte Anlagenschema eines mehrere Kraftwerkseinheiten 16A,..,16D umfassenden Kombikraftwerkes 15 mit einer gemeinsamen Bereitschaftshaltungs-Sammelschiene 17 zur Verteilung von Vorwärm- bzw. Warmhaltungsfluid gemäss einem bevorzugten Ausführungsbeispiel der Erfindung wiedergegeben. Alle Kraftwerkseinheiten 16A,..,16D, die jeweils eine Gasturbinenanlage und einen Wasser/Dampf-Kreislauf mit einem Abhitzekessel und einer Dampfturbine umfassen, sind über erste Absperrarmaturen 18, beispielsweise Ventile, an die Bereitschaftshaltungs-Sammelschiene 17 angeschlossen. Sollen die kritischen Komponenten aus dem Wasser/Dampf-Kreislauf einer Kraftwerkseinheit vor einem Kaltstart vorgewärmt oder für einen Wiederstart warmgehalten werden, wird die entsprechende erste Absperrarmatur 18 geöffnet und das Wärme abgebende Fluid, insbesondere in Form von Sattdampf, aus der Bereitschaftshaltungs-Sammelschiene 17 entnommen. Das entnommene Fluid wird innerhalb der Kraftwerkseinheit durch geeignete Schaltungsmassnahmen an die dafür vorgesehenen Stellen gebracht und eingespeist, um die entsprechenden Komponenten auf Temperatur zu bringen bzw. zu halten.

Für das Fluid in der Bereitschaftshaltungs-Sammelschiene 17 ist keine separate Erzeugungseinrichtung vorgesehen. Vielmehr ist die Bereitschaftshaltungs-Sammelschiene 17 über zweite Absperrarmaturen 19 an eine, mehrere oder alle Kraftwerkseinheiten angeschlossen und bezieht wahlweise von einer oder mehreren dieser Kraftwerkseinheiten, die sich gerade in Betrieb befinden, das auf der gewünschten Temperatur befindliche Fluid. Auf diese Weise kann auf eine separate Vorrichtung zur Bereitstellung des Fluids verzichtet werden.

Das Fluid für die Bereitschaftshaltungs-Sammelschiene 17 kann grundsätzlich auch Sattwasser sein, welches speziell zur Warmhaltung von Kesseltrommeln, Separatoren oder dergleichen dienen kann. Ungünstig ist dabei allerdings das hohe Gewicht in den Leitungen sowie die Gefahr von Wasserschlägen in den Leitungen und in der Dampfturbine. Bevorzugt wird daher als Fluid Sattdampf verwendet, der grundsätzlich durch jeden Druckbehälter, der Sattwasser enthält und kurzzeitig oder stetig Dampf in das System liefern kann, in die Bereitschaftshaltungs-Sammelschiene 17 gespeist werden kann.

Der Vorteil der Verwendung des stofflich gleichen Fluids, d. h. von Wasser oder Dampf zur gegenseitigen Vorwärmung und Warmhaltung von Komponenten der Wasser/Dampf-Kreisläufe von gemeinsam angeordneten Kraftwerkseinheiten liegt auf der Hand. Dabei kann prinzipiell Heisswasser, Sattwasser, Sattdampf und Heissdampf zur Anwendung gelangen. Für die bei der Vorwärmung und Warmhaltung zu erreichenden Temperaturen ist im Falle des Einsatzes von Dampf die Sättigungstemperatur bei gegebenem Druck massgebend. Um die zur Bereitschaftshaltungs-Sammelschiene 17 gehörenden Komponenten nicht auf höhere Temperaturniveaus auslegen zu müssen, bietet sich daher der Einsatz von Sattdampf an, welcher zusätzlich auf einfache Weise beispielsweise den Abhitzekesseln entnommen werden kann.

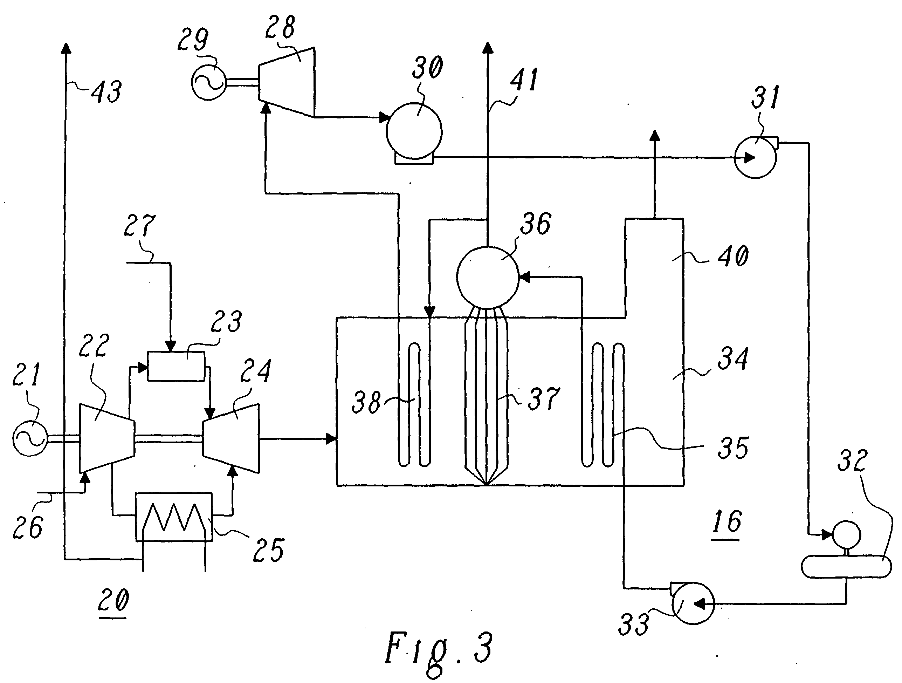

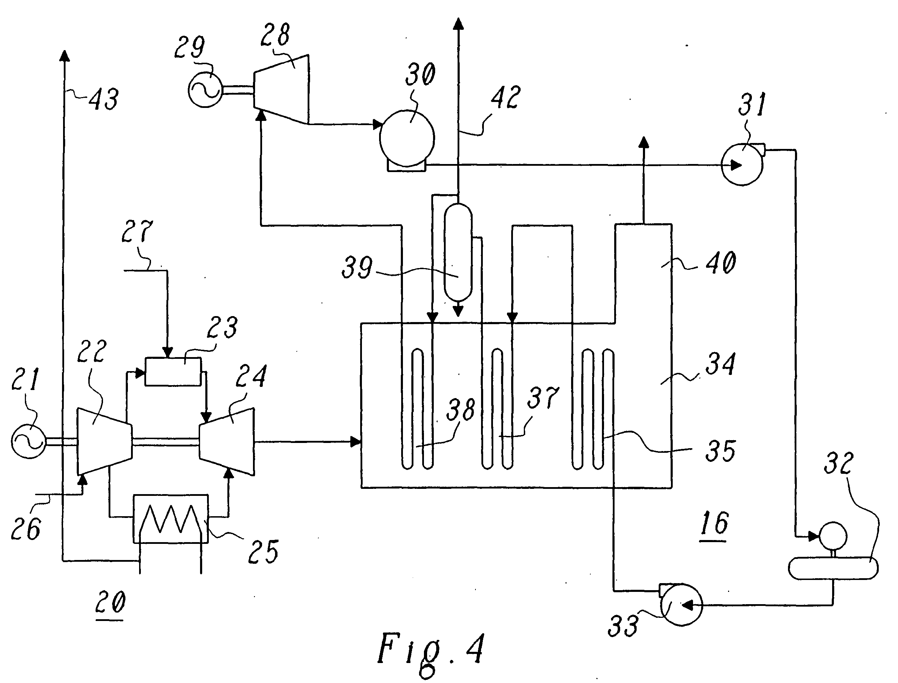

Unter dem verwendeten Begriff des Sattdampfes in Bezug auf die Parameter in Dampftrommeln 36 (Fig. 3), Separatoren 39 (Fig. 4) und der Bereitschaftshaltungs-Sammelschiene 17 werden Dampfzustände im Bereich von geringer Feuchte von ca. 10 % und bis zu einer Ueberhitzung von ca. 50 K für einen vorliegenden Druck verstanden. Dies ist einmal abhängig von der Fahrweise des Abhitzekessels 34 (Fig. 3 und 4) und der Bereitschaftshaltungs-Sammelschiene 17. Zum anderen kann sich durch Wärmeverluste Feuchte bilden, während durch Drosselvorgänge der Dampf überhitzt wird.

Die Entnahme des Sattdampfes in einer der Kraftwerkseinheiten kann auf verschiedene Weise erfolgen, wie dies in Fig. 3 dargestellt ist. Fig. 3 zeigt dazu ein Beispiel für den internen Aufbau einer der Kraftwerkseinheiten aus Fig. 2 mit verschiedenen Anschlussmöglichkeiten zur Einspeisung von Sattdampf in die Bereitschaftshaltungs-Sammelschiene. Die Kraftwerkseinheit 16 umfasst im wesentlichen eine Gasturbinenanlage 20 und einen Wasser/Dampf-Kreislauf mit einem Abhitzekessel 34 und einer Dampfturbine 28. Die Gasturbinenanlage 20 besteht aus einem Verdichter 22, einer Brennkammer 23 und einer Gasturbine 24. Verdichter 22 und Gasturbine 24 sitzen auf einer gemeinsamen Welle und treiben einen ersten Generator 21 an. Der Verdichter 22 saugt Luft über einen Lufteinlass 26 an und verdichtet die Luft. Die verdichtete Luft dient in der Brennkammer 23 zur Verbrennung eines über die Brennstoffzuführung 27 zugeführten flüssigen oder gasförmigen Brennstoffes. Die entstehenden heissen Abgase werden in der Gasturbine 24 entspannt und treten dann in den Abhitzekessel 34 ein, wo sie unter Wärmeabgabe zur Dampferzeugung dienen. Die abgekühlten Abgase verlassen schliesslich den Abhitzekessel 34 über einen Abgaskamin 40.

Gleichzeitig wird ein Teil der verdichteten Luft auf einer bestimmten Druckstufe dem Verdichter 22 entnommen, in einem Kühlluftkühler 25 abgekühlt und anschliessend zur Kühlung der Gasturbine 24 verwendet. Eine Möglichkeit zur Speisung der Bereitschaftshaltungs-Sammelschiene 17 mit Sattdampf besteht nun darin, von dem im Kühlluftkühler 25 erzeugten Dampf einen Teil abzuzweigen und über eine Sattdampfleitung 43 in die (in Fig. 3 nicht gezeigte) Bereitschaftshaltungs-Sammelschiene 17 einzuspeisen.

Andere Möglichkeiten der Entnahme von Sattdampf beziehen sich auf den Wasser/Dampf-Kreislauf. Im Wasser/Dampf-Kreislauf wird Speisewasser aus einem Speisewasserbehälter/Entgaser 32 mittels einer Speisewasserpumpe 33 zunächst durch einen Economizer 35 gepumpt, wo es vorgewärmt wird. Das vorgewärmte Wasser strömt dann in einen mit einer Dampftrommel 36 verbundenen Verdampfer 37 und wird dort verdampft. Der erzeugte Dampf wird schliesslich in einem Ueberhitzer 38 überhitzt und in der (im Beispiel einstufigen) Dampfturbine 28 entspannt. Die Dampfturbine 28 treibt einen zweiten Generator 29 an. Nach Durchlaufen der Dampfturbine 28 wird der Dampf in einem Kondensator 30 kondensiert und das Kondensat mittels einer Kondensatpumpe 31 zurück in den Speisewasserbehälter/Entgaser 32 gepumpt, womit der Kreislauf geschlossen ist.

Im Vergleich zu Fig. 3 mit einem Abhitzekessel 34 auf Basis eines Trommel-Umlaufverdampfers zeigt Fig. 4 einen Abhitzekessel 34 auf Basis eines Zwangdurchlaufverdampfers. Gleiche Anlagen bzw. Komponenten sind mit gleichen Bezugszeichen versehen. Der Unterschied besteht in der Vorwärmung (Economizer 35) und Verdampfung (Verdampfer 37) des dem Abhitzekessel 34 zugeführten Speisewassers in einem Durchlauf. Zwischen dem Verdampfer 37 und dem Ueberhitzer 38 befindet sich ein Separator 39.

Besonders günstig ist es nun, Sattdampf für die Bereitschaftshaltungs-Sammelschiene 17 aus dem Separator 39 (Sattdampfleitung 42 in Fig. 4), oder aus der Dampftrommel 36 (Sattdampfleitung 41 in Fig. 3) zu entnehmen. Zusätzlich ist es aber auch denkbar, an die Bereitschaftshaltungs-Sammelschiene 17 noch einen Hilfskessel anzuschliessen, der - wenn keine der Kraftwerkseinheiten in Betrieb ist - das notwendige Vorwärmfluid zur Verfügung stellt.

Abhitzekessel 34 weisen zur effizienten Ausnutzung der Abgaswärme der Gasturbine 24 wasserdampfseitig bis zu drei Druckstufen auf. Damit besteht die Möglichkeit, mit einer oder mehreren Bereitschaftshaltungs-Sammelschienen 17 auf unterschiedlichen Druck- oder Temperaturniveaus zu arbeiten.

Die Dampfturbine 28 hat den Charakter eines beispielsweisen Dampfverbrauchers. Als weitere in Frage kommende Dampfverbraucher sind technologische Prozesse mit und ohne stoffliche Nutzung des Dampfes denkbar.

Insgesamt ergibt sich mit der Erfindung ein Verfahren bzw. eine Anlage, bei der sich durch das Vorwärmen bzw. Warmhalten der für einen Kaltstart bzw. Wiederstart kritischen Komponenten die Anfahrzeit von Kombikraftwerken deutlich verkürzen lässt bzw. Haltepunkte der Gasturbine beim Anfahren nicht mehr erforderlich sind. Hierdurch kann insbesondere ein spezieller Bypasskamin für die Gasturbine entfallen.

### BEZUGSZEICHENLISTE

- 10: Dampfkraftwerk
- 11: Anfahrdampferzeuger
- 12A,..,12D: Kraftwerkseinheit
- 13: Hilfsdampfschiene
- 14: Ventil
- 15: Kombikraftwerk
- 16,16A,..,16D: Kraftwerkseinheit
- 17: Bereitschaftshaltungs-Sammelschiene (BS)
- 18,19: Absperrarmatur (z.B. Ventil)
- 20: Gasturbinenanlage
- 21,29: Generator
- 22: Verdichter
- 23: Brennkammer
- 24: Gasturbine
- 25: Kühlluftkühler
- 26: Lufteinlass
- 27: Brennstoffzuführung
- 28: Dampfturbine (oder anderer Dampfverbraucher)
- 30: Kondensator
- 31: Kondensatpumpe
- 32: Speisewasserbehälter/Entgaser
- 33: Speisewasserpumpe
- 34: Abhitzekessel
- 35: Economizer
- 36: Dampftrommel
- 37: Verdampfer
- 38: Ueberhitzer
- 39: Separator
- 40: Abgaskamin
- 41,..,43: Sattdampfleitung

## Patentansprüche

1. Verfahren zum Betrieb eines Kombikraftwerkes (15) mit mindestens zwei Kraftwerkseinheiten (16A,..,16D), welche jeweils eine Gasturbinenanlage und einen Wasser/Dampf-Kreislauf mit einem Abhitzekessel und einer Dampfturbine umfassen, wobei zum Vorwärmen und/oder Warmhalten einzelner Komponenten des Wasser/Dampf-Kreislaufes einer der Kraftwerkseinheiten (16A,..,16D) ein Wärme transportierendes Fluid aus einer oder mehreren anderen, in Betrieb befindlichen Kraftwerkseinheiten entnommen und verwendet wird, wobei zur Verteilung des Wärme transportierenden Fluids eine gemeinsame Bereitschaftshaltungs-Sammelschiene (17) verwendet wird, an die alle Kraftwerkseinheiten (16A,..,16D) über erste Absperrarmaturen (18) angeschlossen sind, **dadurch gekennzeichnet, dass** die Bereitschaftshaltungs-Sammelschiene (17) über zweite Absperrarmaturen an eine, mehrere oder alle Kraftwerkseinheiten (16A,..,16D) angeschlossen ist, dass das Wärme transportierende Fluid zum Vorwärmen und/oder Warmhalten über die ersten Absperrarmaturen (18) aus der Bereitschaftshaltungs-Sammelschiene (17) entnommen wird, und dass die Bereitschaftshaltungs-Sammelschiene (17) über die zweiten Absperrarmaturen (19) wahlweise von einen oder mehreren der Kraftwerkseinheiten (16A,..,16D) das Wärme transportierende Fluid bezieht.

2. Verfahren nach Anspruch 1, **dadurch gekennzeichnet, dass** als Wärme transportierendes Fluid Sattwasser verwendet wird.

3. Verfahren nach Anspruch 1, **dadurch gekennzeichnet, dass** als Wärme transportierendes Fluid Sattdampf verwendet wird.

4. Kombikraftwerk (15) zur Durchführung des Verfahrens nach Anspruch 1, mit mindestens zwei Kraftwerkseinheiten (16A,..,16D), welche jeweils eine Gasturbinenanlage und einen Wasser/Dampf-Kreislauf mit einem Abhitzekessel und einer Dampfturbine umfassen, wobei alle Kraftwerkseinheiten (16A,..,16D) zum Vorwärmen und/oder Warmhalten einzelner Komponenten des Wasser/Dampf-Kreislaufes über erste Absperrarmaturen (18) an eine gemeinsame Bereitschaftshaltungs-Sammelschiene (17) für ein Wärme transportierendes Fluid angeschlossen sind, **dadurch gekennzeichnet, dass** die Bereitschaftshaltungs-Sammelschiene (17) über zweite Absperrarmaturen (19) aus einer oder mehreren der Kraftwerkseinheiten (16A,..,16D) mit dem Fluid versorgt wird.

5. Kombikraftwerk nach Anspruch 4, **dadurch gekennzeichnet, dass** als Wärme transportierendes Fluid Sattdampf verwendet wird, und dass die Bereitschaftshaltungs-Sammelschiene (17) zur Sattdampfentnahme jeweils über eine Sattdampfleitung (41,..,43) mit einer oder mehreren Kraftwerkseinheiten (16A,..,16D) verbunden ist.

6. Kombikraftwerk nach Anspruch 5, **dadurch gekennzeichnet, dass** die Kraftwerkseinheiten (16A,..,16D) jeweils eine Gasturbinenanlage (20) mit einem Kühlluftkühler (25) umfassen, und dass die Bereitschaftshaltungs-Sammelschiene (17) über eine Sattdampfleitung (43) an den Kühlluftkühler (25) angeschlossen ist.

7. Kombikraftwerk nach Anspruch 5, **dadurch gekennzeichnet, dass** die Kraftwerkseinheiten (16A,..,16D) jeweils einen Abhitzekessel (34) mit einer Dampftrommel (36) umfassen, und dass die Bereitschaftshaltungs-Sammelschiene (17) über eine Sattdampfleitung (41) an die Dampftrommel (36) angeschlossen ist.

8. Kombikraftwerk nach Anspruch 5, **dadurch gekennzeichnet, dass** die Kraftwerkseinheiten (16A,..,16D) jeweils einen Abhitzekessel (34) mit einem Separator (39) umfassen, und dass die Bereitschaftshaltungs-Sammelschiene (17) über eine Sattdampfleitung (42) an den Separator (39) angeschlossen ist.

## Claims

1. Method for operating a combined cycle power plant (15), with at least two power plant units (16A,...,16D) which comprise in each case a gas turbine installation and a water/steam cycle with a waste heat boiler and a steam turbine, wherein for preheating and/or keeping warm individual components of the water/steam cycle of one of the power plant units (16A,...,16D), a heat-transporting fluid is extracted from one other or from a plurality of other power plant units in operation, and used, wherein a common standby manifold (17) is used for distributing the heat-transporting fluid, to which common standby manifold all the power plant units (16A,...,16D) are connected via first shut-off cocks (18), wherein the standby manifold (17) is connected to one, to a plurality, or to all the power plant units (16A,..,16D) via second shut-off cocks, the heat-transporting fluid for preheating and/or for keeping warm is extracted from the standby manifold (17) via the first shut-off cocks (18), and the standby manifold (17) selectively draws the heat-transporting fluid from one or from a plurality of the power plant units (16A,...,16D) via the second shut-off cocks (19).

2. Method according to Claim 1, **characterized in that** saturated water is used as heat-transporting fluid.

3. Method according to Claim 1, **characterized in that** saturated steam is used as heat-transporting fluid.

4. Combined cycle power plant (15) for implementing the method according to Claim 1, with at least two power plant units (16A,...,16D), which comprise in each case a gas turbine installation and a water/steam cycle with a waste heat boiler and a steam turbine, wherein all the power plant units (16A,...,16D) for preheating and/or keeping warm individual components of the water/steam cycle are connected to a common standby manifold (17) for a heat-transporting fluid via first shut-off cocks (18), wherein the standby manifold (17) is supplied with fluid from one or from a plurality of the power plant units (16A,...,16D) via second shut-off cocks (19).

5. Combined cycle power plant according to Claim 4, **characterized in that** saturated steam is used as heat-transporting fluid, and the standby manifold (17) for saturated steam extraction is connected in each case to one or to a plurality of power plant units (16A,...,16D) via a saturated steam line (41,...,43).

6. Combined cycle power plant according to Claim 5, **characterized in that** the power plant units (16A,...,16D) comprise in each case a gas turbine installation (20) with a cooling air cooler (25), and the standby manifold (17) is connected to the cooling air cooler (25) via a saturated steam line (43).

7. Combined cycle power plant according to Claim 5, **characterized in that** the power plant units (16A,...,16D) comprise in each case a waste heat boiler (34) with a steam drum (36), and the standby manifold (17) is connected to the steam drum (36) via a saturated steam line (41).

8. Combined cycle power plant according to Claim 5, **characterized in that** the power plant units (16A,...,16D) comprise in each case a waste heat boiler (34) with a separator (39), and the standby manifold (17) is connected to the separator (39) via a saturated steam line (42).

## Revendications

1. Procédé de fonctionnement d'une centrale combinée (15), comprenant au moins deux unités de centrale (16A,.., 16D), qui comprennent chacune une installation de turbine à gaz et un circuit eau/vapeur avec une chaudière à chaleur perdue et une turbine à vapeur, dans lequel, pour préchauffer et/ou maintenir chauds des composants individuels du circuit eau/vapeur de l'une des unités de centrale (16A,.., 16D), un fluide caloporteur est prélevé d'une ou de plusieurs autres unités de centrale en fonctionnement et est utilisé, un rail collecteur de mise en attente commun (17) étant utilisé pour distribuer le fluide caloporteur, rail auquel sont raccordées toutes les unités de centrale (16A,.., 16D) par le biais de premiers robinets d'arrêt (18), **caractérisé en ce que** le rail collecteur de mise en attente commun (17) est raccordé par le biais de deuxièmes robinets d'arrêt à une, plusieurs ou à toutes les unités de centrale (16A,.., 16D), **en ce que** le fluide caloporteur pour préchauffer et/ou maintenir chaud est prélevé du rail collecteur de mise en attente (17) par le biais des premiers robinets d'arrêt (18), et **en ce que** le rail collecteur de mise en attente (17) reçoit le fluide caloporteur par le biais des deuxièmes robinets d'arrêt (19) de manière sélective depuis une ou plusieurs des unités de centrale (16A,.., 16D).

2. Procédé selon la revendication 1, **caractérisé en ce que** l'on utilise de l'eau saturée en tant que fluide caloporteur.

3. Procédé selon la revendication 1, **caractérisé en ce que** l'on utilise de la vapeur saturée en tant que fluide caloporteur.

4. Centrale combinée (15) pour mettre en oeuvre le procédé selon la revendication 1, comprenant au moins deux unités de centrale (16A,.., 16D), qui comprennent chacune une installation de turbine à gaz et un circuit vapeur/eau avec une chaudière à chaleur perdue et une turbine à vapeur, toutes les unités de centrale (16A,.., 16D) pour préchauffer et/ou maintenir chauds des composants individuels du circuit vapeur/eau étant raccordées par le biais de premiers robinets d'arrêt (18) à un rail collecteur de mise en attente commun (17) pour un fluide caloporteur, **caractérisée en ce que** le rail collecteur de mise en attente (17) est alimenté en fluide depuis l'une ou plusieurs des unités de centrale (16A,.., 16D) par le biais de deuxièmes robinets d'arrêt (19).

5. Centrale combinée selon la revendication 4, **caractérisée en ce que** l'on utilise comme fluide caloporteur de la vapeur saturée et **en ce que** le rail collecteur de mise en attente (17) est connecté à chaque fois pour prélever la vapeur saturée par le biais d'une conduite de vapeur saturée (41,.., 43) à une ou plusieurs unités de centrale (16A,.., 16D).

6. Centrale combinée selon la revendication 5, **caractérisée en ce que** les unités de centrale (16A,.., 16D) comprennent chacune une installation de turbine à gaz (20) avec un refroidisseur à air de refroidissement (25) et **en ce que** le rail collecteur de mise en attente (17) est raccordé au refroidisseur à air de refroidissement (25) par le biais d'une conduite de vapeur saturée (43).

7. Centrale combinée selon la revendication 5, **caractérisée en ce que** les unités de centrale (16A,.., 16D) comprennent chacune une chaudière à chaleur perdue (34) avec un tambour de vapeur (36), et **en ce que** le rail collecteur de mise en attente (17) est raccordé par le biais d'une conduite de vapeur saturée (41) au tambour de vapeur (36).

8. Centrale combinée selon la revendication 5, **caractérisée en ce que** les unités de centrale (16A,.., 16D) comprennent chacune une chaudière à chaleur perdue (34) avec un séparateur (39), et **en ce que** le rail collecteur de mise en attente (17) est raccordé au séparateur (39) par le biais d'une conduite de vapeur saturée (42).
